# EUROPÄISCHE PATENTSCHRIFT

(11) **EP 1 219 229 B1**
(45) Veröffentlichungstag und Bekanntmachung des Hinweises auf die Patenterteilung: **13.04.2005**
(21) Anmeldenummer: 01128931.1
(22) Anmeldetag: 05.12.2001
(51) Int. Cl.: A47L 17/02, E03C 1/18

(54) **Küchenspüle mit einem Zusatzbecken**
Kitchen sink with an additional basin
Evier de cuisine avec une cuvette additionnelle

(30) Priorität: 27.12.2000 DE 10065057
(43) Veröffentlichungstag der Anmeldung: 03.07.2002
(73) Patentinhaber: NIRO-PLAN AG, 6302 Zug (CH)
(72) Erfinder:
(74) Vertreter: Brommer, Hans Joachim, Dr.-Ing.

(56) Entgegenhaltungen:
- DE-A- 3 421 821
- US-A- 1 356 362
- US-A- 1 711 731

## Beschreibung

Die Erfindung betrifft eine Küchenspüle mit zumindest einem Hauptbecken und einem Zusatzbecken und gegebenenfalls einem Tropfteil, wobei das Zusatzbecken einen eigenen Abfluss aufweist. Eine solche Küchenspüle ist aus der Druckschrift DE-A-3421821 bereits bekannt.

Zusatzbecken in Küchenspülen sind im Stand der Technik insbesondere als Restebecken bekannt, die, durch einen Steg vom Hauptbecken getrennt, meist zwischen der Abtropffläche des Tropfteils und dem Hauptbecken angeordnet sind. Die Oberkanten dieses Restebeckens liegen dabei in etwa auf dem Niveau der Abtropffläche des Tropfteils, so dass vom Tropfteil ablaufendes Wasser in das Zusatzbecken fließt, falls das Tropfteil keinen eigenen Abfluss hat. Häufig fungiert der Abfluss des Zusatzbeckens auch als Überlauf, wenn der Abfluss des Hauptbeckens verstopft ist.

Derartige Küchenspülen mit getrennt voneinander angeordneten Haupt- und Zusatzbecken werden unter anderem von der Anmelderin schon seit Jahren hergestellt und vertrieben. Bei der Küchenspüle nach DE-A-3421821 ist das Nebenbecken als eine herausnehmbare Einheit in dem Hauptbecken angeordnet. Bei herausgenommenem Nebenbecken ist das Hauptbecken vergrößert. Ausgehend vom bekannten Stand der Technik liegt die Aufgabe der vorliegenden Erfindung darin, eine Küchenspüle mit Haupt- und Zusatzbecken derart zu verbessern, dass ihre Funktionalität erhöht wird und sich weitere Anwendungsmöglichkeiten ergeben.

Diese Aufgabe wird erfindungsgemäß dadurch gelöst, dass das Zusatzbecken einerseits durch eine Ausbeulung einer Seitenwand des Hauptbeckens gebildet ist und andererseits in das Hauptbecken hineinragt. Die Erfindung beruht also auf dem Gedanken, das Haupt- und das Zusatzbecken nicht mehr räumlich voneinander zu trennen, sondern vielmehr die Kontur des Hauptbeckens durch das Zusatzbecken lokal zu erweitern. Diese Erweiterung ermöglicht es, sperrige Teile wie etwa Grillroste, Pfannen mit langem Griff oder dergleichen in das Hauptbecken zu tauchen, da das Zusatzbecken als weiterer Raum genutzt werden kann, in den sich beispielsweise der Pfannengriff hineinerstreckt.

Der Übergang zwischen Haupt- und Zusatzbecken kann außerdem als Auflagerrand für sperrige Teile dienen und somit deren Handhabung erleichtern, da er auf deutlich tieferem Niveau als der obere Rand des Hauptbeckens liegt.

Die Funktion des Zusatzbeckens wird dabei nicht beeinträchtigt; es kann in üblicher Weise als Resteschale oder Ablage für zu putzendes Gemüse oder dergleichen dienen.

Schließlich ergibt sich durch die erfindungsgemäße Ausgestaltung der Küchenspüle insgesamt ein neues und apartes Design.

In konstruktiver Ausbildung der vorliegenden Erfindung kann die Seitenwand, in der die Ausbeulung angeordnet ist, ein geringeres Gefälle als die übrigen Seitenwände des Hauptbeckens aufweisen. Dies führt nicht nur zu einer Volumenvergrößerung des Hauptbeckens sondern auch zu einem gefälligen Aussehen der gesamten Spüle. Insbesondere wird durch diese Maßnahme die schüsselartige Ausbildung des Zusatzbeckens begünstigt.

Zweckmäßig ist die Ausbeulung auf die obere Hälfte der Seitenwand beschränkt. Dies ermöglicht es, ein ausreichend großes Volumen des Hauptbeckens, nämlich die gesamte untere Hälfte, mit Wasser zur Reinigung von Geschirr oder dergleichen füllen zu können, während gleichzeitig gewährleistet ist, dass das Zusatzbecken von diesem Wasser nicht erreicht wird. Dies ist insbesondere dann vorteilhaft, wenn das Zusatzbecken als Aufnahmebehältnis für noch zu verarbeitende Lebensmittel wie Obst oder Salat dient, die mit dem Spülwasser des Hauptbeckens nicht in Berührung kommen sollen.

Weiter kann vorgesehen sein, dass die Seitenwand mit der Ausbeulung den Übergang zu einem Tropfteil bildet, so dass sich das Tropfteil an die vom Hauptbecken abgewandte Seite des Zusatzbeckens anschließt. Wenn dann die Ausbeulung in obiger Weise in einer Seitenwand mit gegenüber den anderen Seitenwänden geringerem Gefälle angeordnet ist, fügen sich Tropfteil und Zusatzbecken harmonisch in den Gesamteindruck der Spüle ein. Prinzipiell ist es im Übrigen aber auch denkbar, die Ausbeulung an einer beliebigen anderen Wand des Hauptbeckens, gegebenenfalls an mehreren Wänden, vorzusehen.

In einer bevorzugten konstruktiven Ausgestaltung der Erfindung liegt zumindest etwa die Hälfte des Zusatzbeckens außerhalb der Grundform des Hauptbeckens, das heißt die gedachte Kontur des Hauptbeckens schneidet höchstens 50 % des Zusatzbeckens ab. Dadurch wird ein größerer Raum außerhalb des Hauptbeckens geschaffen, so dass besonders sperrige Teile in der Spüle gereinigt werden können.

Besonders zweckmäßig ist es, wenn das Zusatzbecken eine Haltevorrichtung für einen in das Zusatzbecken einsetzbaren Becken-Einsatz aufweist. Durch einen derartigen Becken-Einsatz kann ein gegenüber dem Zusatzbeckenvolumen deutlich vergrößerter Raum geschaffen werden, in dem Lebensmittel oder dergleichen aufbewahrt, geputzt oder anderweitig behandelt werden können. Denn der für das Zusatzbecken vorgesehene Becken-Einsatz kann weit nach oben gezogen sein und weit in das Hauptbecken hineinragen.

Was die Haltevorrichtung angeht, so kann sie als lösbarer Klemm-, Bajonett-Verschluss oder dergleichen ausgebildet sein. Die Lösbarkeit der Haltevorrichtung ermöglicht es, den Becken-Einsatz außerhalb der Spüle bequem mit Lebensmitteln oder ähnlichem zu befüllen und dann den gesamten Einsatz beispielsweise zum Abspülen in das Zusatzbecken einzusetzen.

Der Becken-Einsatz selbst kann zweckmäßig der Kontur des Zusatzbeckens angepasst, aber weitgehend rotationssymmetrisch ausgebildet sein. In Frage kommen dabei Schüsselformen in verschiedensten Varianten, auch in Abweichung von der Rotationssymmetrie.

An dem Becken-Einsatz können im Übrigen Handgriffe angebracht oder eingeformt sein, die dessen Handhabung insbesondere das Entnehmen des Becken-Einsatzes aus dem Zusatzbecken erleichtern.

In diesem Zusammenhang ist es zweckmäßig, wenn der Becken-Einsatz einen eigenen Abfluss aufweist. Dieser eigene Abfluss kann auch als Sieb oder dergleichen ausgebildet sein. Insbesondere beim Reinigen von Lebensmitteln in dem Becken-Einsatz ist dann gewährleistet, dass Wasser und Verunreinigungen in den Abfluss des Zusatzbeckens abfließen können.

Falls die Spüle unterhalb der Arbeitsplatte eingebaut wird, kann der obere Rand des Becken-Einsatzes über die Spüle vorstehen, derart, dass der Becken-Einsatz etwa mit der Oberseite der Arbeitsplatte fluchtet. Dies hat den Vorteil, dass auf der Arbeitsplatte Lebensmittel geschnitten werden können und dann in geschnittenen Zustand einfach von der Arbeitsplattenoberfläche direkt in den Becken-Einsatz geschoben werden können.

Schließlich kann die Spüle noch ein auf das Hauptbecken auflegbares Rüstbrett aufweisen, das einseitig entsprechend der Kontur des Zusatzbecken-Einsatzes ausgeschnitten ist. Rüstbrett und Zusatzbecken-Einsatz sind dann so aufeinander abgestimmt, dass sie gemeinsam eingesetzt werden können und bündig zusammenpassen. Wenn dann noch die Höhen des Rüstbrettes und des Becken-Einsatzes aneinander abgestimmt werden, können Abfälle beim Schneiden oder Putzen auf dem Rüstbrett leicht und direkt in den Becken-Einsatz geschoben werden.

Weitere Vorteile und Merkmale der Erfindung ergeben sich aus der nachfolgenden Beschreibung zweier Ausführungsbeispiele anhand der Zeichnungen;
dabei zeigen
- Figur 1: einen Längsschnitt durch eine erfindungsgemäße Küchenspüle;
- Figur 2 (a) - (c): eine Draufsicht, einen Längsschnitt und einen Querschnitt der Spüle;
- Figur 3 (a) - (b): einen Becken-Einsatz für ein Zusatzbecken der Spüle im Querschnitt bzw. von oben gesehen;
- Figur 4 (a) - (b): einen am unteren Teil des Becken-Einsatzes gebildeten Bajonettverschluss, in der Seitenansicht bzw. im Radialschnitt;
- Figur 5 (a) - (b): einen Sieb-Einsatz in Seitenansicht bzw. von oben gesehen;
- Figur 6 (a) - (c): eine weitere Ausführungsform einer erfindungsgemäßen Spüle mit zusätzlichem Tropfteil in Draufsicht, in einer Längsseitenansicht und in einer Querseitenansicht.

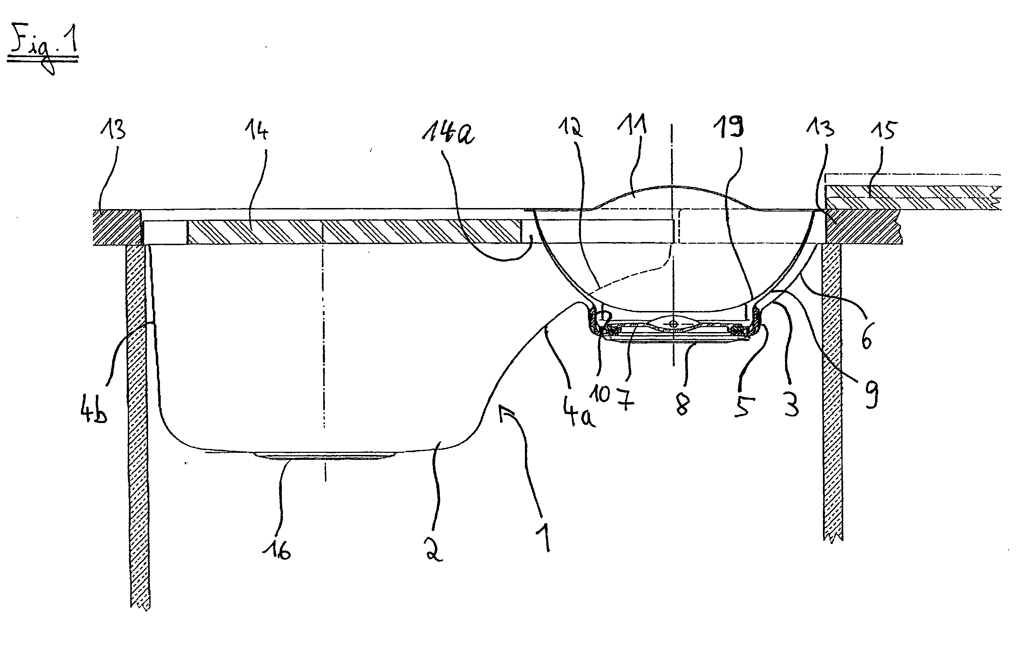

Figur 1 stellt eine erfindungsgemäße Küchenspüle 1 im Längsschnitt dar. Diese Küchenspüle hat ein Hauptbecken 2 und ein Zusatzbecken 3, die in einen gemeinsamen äußeren Schwallrand übergehen. Dieser Schwallrand ist im Ausführungsbeispiel unterhalb der Arbeitsplatte 13 positioniert. Wesentlich ist nun, dass das Zusatzbecken 3 durch eine Ausbeulung einer Seitenwand 4a des Hauptbeckens 2 gebildet ist. Das Hauptbecken 2 verfügt über weitere Seitenwände, von denen nur die der Seitenwand 4a gegenüberliegende Seitenwand 4b dargestellt ist. Deutlich zu erkennen ist, dass das Gefälle der Seitenwand 4a geringer ist als das Gefälle der relativ steil verlaufenden Seitenwand 4b.

Was das Zusatzbecken 3 angeht, so besteht es aus einem kreisförmigen Boden, der im wesentlichen als Abfluss 8 ausgebildet ist, einem zylindrischen Ansatz 5 und einer sich an diesen anschließenden, wannenartig nach oben erstreckenden Seitenwandung 6. Im unteren Bereich des zylindrischen Ansatzes 5 befinden sich innenseitig Teile eines Bajonett-Verschlusses.

In den zylindrischen Ansatz 5 des Zusatzbeckens 3 ist ein in Figur 3 dargestellter Becken-Einsatz 9 mittels des genannten Bajonett-Verschlusses einschraubbar. Dazu hat der Becken-Einsatz 9 an der Unterseite einen zylindrischen Ansatz 10, der in den zylindrischen Absatz 5 des Zusatzbeckens eingreift und ebenfalls als ein Teil des Bajonett-Verschlusses ausgebildet ist.

Die weitere Form des Becken-Einsatzes 9 ist im Wesentlichen an die Kontur des Zusatzbeckens 3 angepaßt, nämlich schüsselförmig mit eigener Abflussöffnung 8' ausgebildet, aber derart, dass der Einsatz mit einem Teil seines Umfanges stark in das Hauptbecken hineinragt, wie an der gestrichelt gezeichneten, gedachten Kontur 12 des Hauptbeckens erkennbar ist. An der Oberseite des Becken-Einsatzes 9 sind Handgriffe 11 zu erkennen, die die Handhabung, insbesondere das Ein- und Ausschrauben des Becken-Einsatzes 9 aus dem Zusatzbecken 3 erleichtern, so dass er stabil im Zusatzbecken befestigt werden kann.

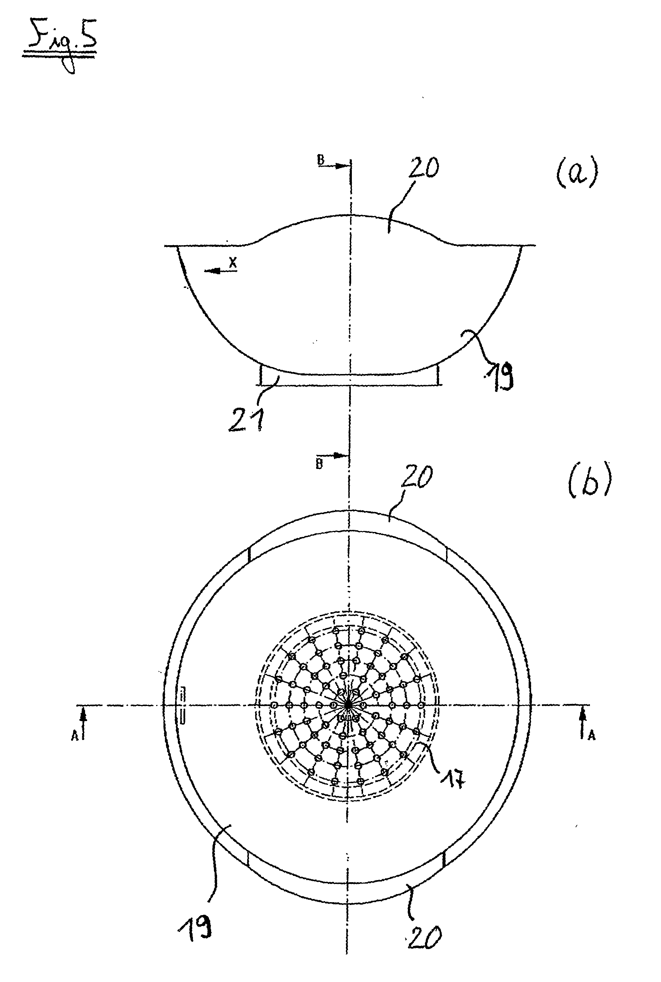

In den Becken-Einsatz 9 sind weitere Zubehörteile einsetzbar, etwa ein Sieb-Einsatz 19, wie aus Figur 1 und Figur 5 hervorgeht. Dieser Siebeinsatz hat nahezu die gleiche Form wie der Becken-Einsatz 9, so dass er bündig in diesen hineinpasst. Er kann aber bedarfsweise auch ohne den Becken-Einsatz unmittelbar in das Zusatzbecken 3 eingesetzt werden.

Weiter ist in Figur 1 noch erkennbar, dass die Oberkante des Becken-Einsatzes 9 - wie auch des Siebeinsatzes 19 - nach oben über die Spüle vorsteht und mit der Oberseite der Arbeitsplatte 13 fluchtet.

Schließlich sind noch zwei Rüstbretter 14, 15 dargestellt, wobei das erste Rüstbrett 14 auf dem oberen Rand des Hauptbeckens 2 aufliegt und an der dem Becken-Einsatz 9 zugewandten Seite einen Ausschnitt 14a entsprechend der Kontur des Becken-Einsatzes 9 aufweist. An der gegenüberliegenden Seite weist das Rüstbrett 14 einen weiteren Ausschnitt auf, in den ein Benutzer bequem mit der Hand eingreifen kann, wenn er das Rüstbrett entfernen möchte. Das andere Rüstbrett 15 liegt auf der Arbeitsplatte 13 auf.

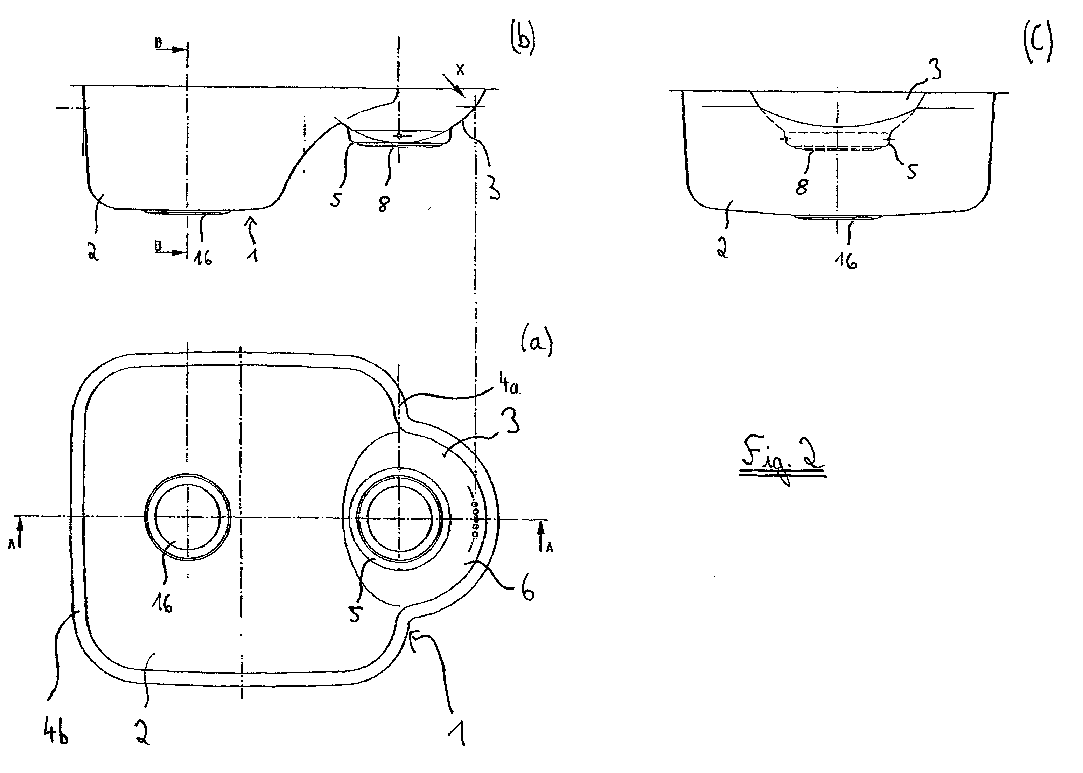

Figur 2 (a) zeigt die Küchenspüle 1 mit Hauptbecken 2 und Zusatzbecken 3 in Draufsicht. Deutlich erkennbar ist aus dieser Draufsicht, dass mehr als die Hälfte des Zusatzbeckens 3 außerhalb der Grundform des Hauptbeckens 2 liegt. Dies soll heißen, dass die gedachte Kontur des Hauptbeckens 2 weniger als die Hälfte des Zusatzbeckens 3 abschneidet.

Weiter ist hier deutlich zu sehen, wie das Zusatzbecken 3 als Ausbeulung in die Seitenwandung 4a eingeformt ist. Dabei bildet die Oberkante des Zusatzbeckens 3 in Draufsicht etwa einen Halbkreis, während die gegenüberliegende Kante, die den Übergang zum Hauptbecken bildet, die Form eines abfallenden elliptischen Bogens hat.

Figur 2 (b) zeigt einen Längsschnitt der Spüle 1 entlang der Linie A-A der Figur 2 (a), Figur 2 (c) einen Querschnitt entlang der Linie B-B der Figur 2 (b).

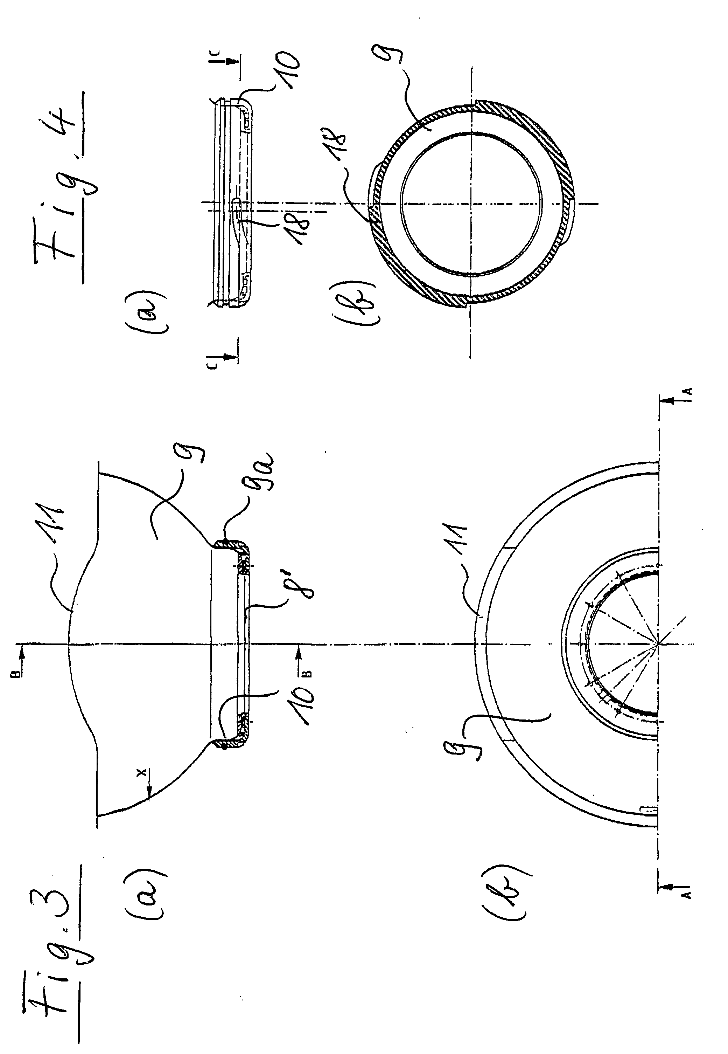

Figuren 3 und 4 zeigen einen runden wannenförmigen Beckeneinsatz 9 für das Zusatzbecken 3 mit dem Bajonett-Verschluss. Zu erkennen sind zwei an der Oberseite angeformte Griffmulden 11, der zentral im Boden angeordnete Abfluss 8' und der Bajonett-Verschluss 9a. Dazu sind an den zylindrischen Ansatz 10 des Beckeneinsatzes 9 äußere Umfangsleisten 18 angeformt, die so ausgebildet sind, dass sie in entsprechende Ausnehmungen des zylindrischen Ansatzes 5 des Zusatzbeckens 3 eingreifen können.

Figur 5 zeigt einen Siebeinsatz 19, der in den Beckeneinsatz 9, aber auch direkt in das Zusatzbecken 3 hineinpaßt. Er hat also ebenfalls eine runde Wannenform mit oberen Griffmulden 20 und einen unteren zylindrischen Ansatz 21, der als Stellrand fungiert. Sein Bodenbereich 17 ist siebartig ausgestaltet mit einer Vielzahl von Öffnungen. Dieser Siebeinsatz ist insbesondere zum Abbrausen von Lebensmitteln, zum Abschrecken von Teigwaren und dergleichen geeignet.

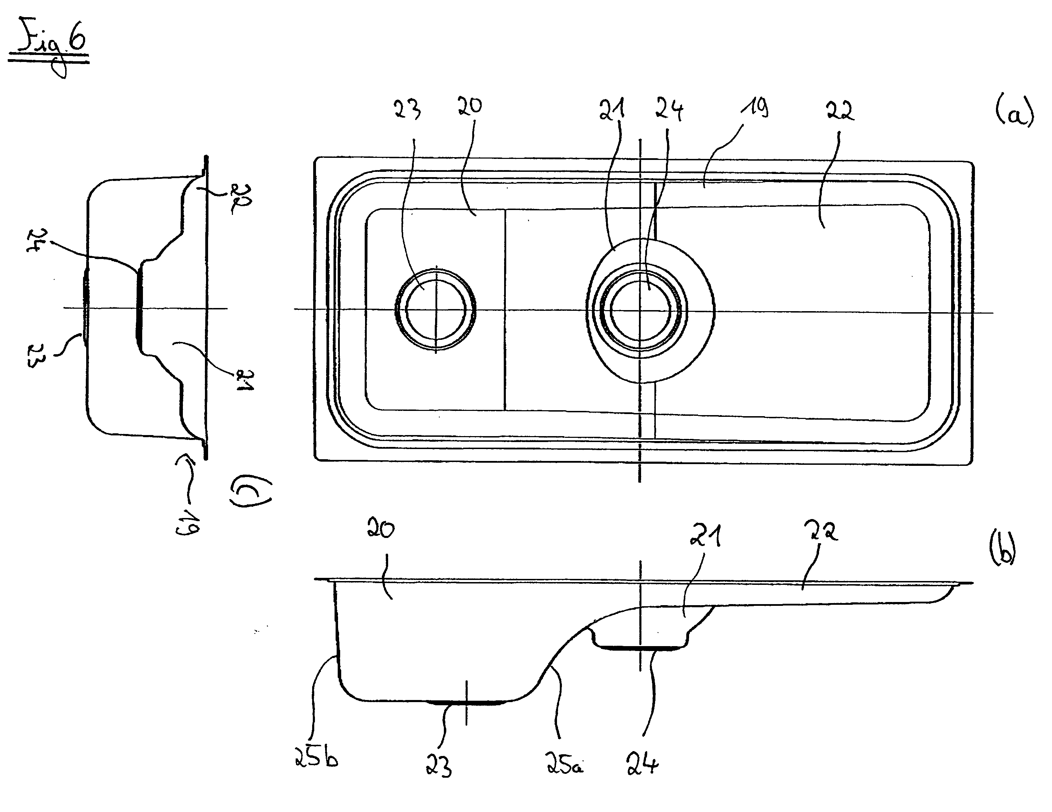

Figur 6 zeigt eine alternative Ausführungsform einer erfindungsgemäßen Spüle 19 mit einem Hauptbecken 20, einem Zusatzbecken 21 und einem Tropfteil 22, das sich auf der dem Hauptbecken abgewandten Seite an das Zusatzbecken 21 anschließt. Deutlich zu erkennen sind weiterhin ein Abfluss 23 des Hauptbeckens 20 und ein Abfluss 24 des Zusatzbeckens 21.

Wie insbesondere aus der Seitenansicht der Figur 6 (b) der Spüle 19 hervorgeht, ist das Zusatzbecken 21 auch bei dieser Ausführungsform einerseits in eine Seitenwandung 25a des Hauptbeckens 23 eingeformt und ragt andererseits in das Hauptbecken hinein. Im Gegensatz zu der vorherigen Bauform läuft hier die Seitenwand, in der das Zusatzbecken angeordnet ist, unter verstärkter Abflachung weiter und geht in das Tropfteil 22 über.

In den Abfluss 8 des Zusatzbeckens und in den Abfluss 16 des Hauptbeckens werden jeweils die üblichen Abflussarmaturen mit einem Ablaufventil montiert, so dass die Abflüsse beider Becken unabhängig voneinander verschließbar sind. Es liegt aber auch im Rahmen der Erfindung, den Beckeneinsatz 9 mit einem eigenen Ablaufventil in der Öffnung 8' zu versehen.

Schließlich ist noch zu erwähnen, dass die Spüle in üblicher Weise aus Edelstahl, Keramik oder anderen geeigneten Materialien hergestellt werden kann.

## Patentansprüche

1. Küchenspüle mit zumindest einem Hauptbecken (2, 20) und einem Zusatzbecken (3, 21) und gegebenenfalls einem Tropfteil (22), wobei das Zusatzbecken (3, 21) einen eigenen Abfluss (8, 24) aufweist,
**dadurch gekennzeichnet,**
**dass** das Zusatzbecken (3, 21) einerseits durch eine Ausbeulung einer Seitenwand (4a, 25a) des Hauptbeckens (2, 20) gebildet ist und andererseits in das Hauptbecken (2, 20) hineinragt.

2. Küchenspüle nach Anspruch 1,
**dadurch gekennzeichnet,**
**dass** die Ausbeulung in einer Seitenwand (4a, 25a) angeordnet ist, die ein geringeres Gefälle als die übrigen Seitenwände des Hauptbeckens (2, 20) aufweist.

3. Küchenspüle nach Anspruch 1,
**dadurch gekennzeichnet,**
**dass** die Ausbeulung auf die obere Hälfte der Seitenwand (4a, 25a) beschränkt ist.

4. Küchenspüle nach Anspruch 1,
**dadurch gekennzeichnet,**
**dass** die Seitenwand (4a, 25a) mit der Ausbeulung den Übergang zum Tropfteil (22) bildet.

5. Küchenspüle nach Anspruch 1,
**dadurch gekennzeichnet,**
**dass** zumindest etwa die Hälfte des Zusatzbeckens (3, 21) außerhalb der Grundform des Hauptbeckens (2, 20) liegt.

6. Küchenspüle nach Anspruch 1,
**dadurch gekennzeichnet,**
**daß** ein Übergang zwischen Hauptbecken (2) und Zusatzbecken (3) vorhanden ist, dessen Niveau oberhalb des Abflußes (8) des Zusatzbeckens (3), aber unterhalb der oberen Beckenränder liegt.

7. Küchenspüle nach Anspruch 1,
**dadurch gekennzeichnet,**
**dass** das Zusatzbecken (3, 21) eine Haltevorrichtung für einen in das Zusatzbecken (3, 21) einsetzbaren Becken-Einsatz (9) aufweist.

8. Küchenspüle nach Anspruch 7,
**dadurch gekennzeichnet,**
**dass** die Haltevorrichtung als lösbarer Klemm-, Bajonett-Verschluss oder dergleichen ausgebildet ist.

9. Küchenspüle nach Anspruch 7,
**dadurch gekennzeichnet,**
**dass** der einsetzbare Becken-Einsatz (9) der Kontur des Zusatzbeckens (3, 21) angepaßt, aber weitgehend rotationssymmetrisch ausgebildet ist.

10. Küchenspüle nach Anspruch 7,
**dadurch gekennzeichnet,**
**dass** der Becken-Einsatz (9) einen eigenen Abfluss (8') aufweist.

11. Küchenspüle nach Anspruch 7,
**daduch gekennzeichnet**,
**dass** bei ihrem Einbau unterhalb der Arbeitsplatte (13) der obere Rand des Becken-Einsatzes (9) über die Spüle (1, 19) vorsteht, derart, dass er etwa mit der Oberseite der Arbeitsplatte (13) fluchtet.

12. Küchenspüle nach Anspruch 7, mit einem auf das Hauptbecken (2, 20) auflegbaren Rüstbrett (14),
**dadurch gekennzeichnet,**
**dass** das Rüstbrett (14) einseitig entsprechend der Kontur des Zusatzbecken-Einsatzes (9) ausgeschnitten ist.

## Claims

1. Kitchen sink with at least one main basin (2, 20) and an additional basin (3, 21) and optionally a draining part (22), the additional basin (3, 21) having its own drain (8, 24), **characterised in that** the additional basin (3, 21) is on the one hand formed by a protrusion of a side wall (4a, 25a) of the main basin (2, 20) and on the other hand projects into the main basin (2, 20).

2. Kitchen sink as claimed in Claim 1, **characterised in that** the protrusion is disposed in a side wall (4a, 25a) which has a lesser inclination than the remaining side walls of the main basin (2, 20).

3. Kitchen sink as claimed in Claim 1, **characterised in that** the protrusion is confined to the upper half of the side wall (4a, 25a).

4. Kitchen sink as claimed in Claim 1, **characterised in that** the side wall (4a, 25a) with the protrusion forms the transition to the draining part (22).

5. Kitchen sink as claimed in Claim 1, **characterised in that** at least approximately half of the additional basin (3, 21) lies outside the basic outline of the main basin (2, 20).

6. Kitchen sink as claimed in Claim 1, **characterised in that** a transition between the main basin (2, 20) and the additional basin (3, 21) is provided at a level which lies above the drain (8, 24) of the additional basin (3, 21) but below the upper edges of the basin.

7. Kitchen sink as claimed in Claim 1, **characterised in that** the additional basin (3, 21) has a holding device for a basin insert (9) which can be inserted into the additional basin (3, 21).

8. Kitchen sink as claimed in Claim 7, **characterised in that** the holding device is constructed as a releasable clamping or bayonet closure or the like.

9. Kitchen sink as claimed in Claim 7, **characterised in that** the insertable basin insert (9) is adapted to the contour of the additional basin (3, 21) but is constructed so as to be largely axially symmetrical.

10. Kitchen sink as claimed in Claim 7, **characterised in that** the basin insert (9) has its own drain (8').

11. Kitchen sink as claimed in Claim 7, **characterised in that** when it is installed below the worktop (13) the upper edge of the basin insert (9) projects above the sink (1, 29) in such a way that it is aligned approximately with the upper surface of the worktop (13).

12. Kitchen sink as claimed in Claim 7, with a preparation board (14) which can be placed onto the main basin (2, 20), **characterised in that** the preparation board (14) is cut out on one side corresponding to the contour of the basin insert (9).

## Revendications

1. Évier de cuisine comprenant au moins une cuve principale (2, 20) et une cuve additionnelle (3, 21) et, le cas échéant, un égouttoir (22), la cuve additionnelle (3, 21) possédant un écoulement (8, 24) propre, **caractérisé en ce que** la cuve additionnelle (3, 21), d'une part, est formée par une bosse ménagée dans une paroi latérale (4a, 25a) de la cuve principale (2, 20) et, d'autre part, empiète sur la cuve principale (2, 20).

2. Évier de cuisine selon la revendication 1, **caractérisé en ce que** la bosse est située dans une paroi latérale (4a, 25a) dont l'inclinaison est moins importante que celle des autres parois latérales de la cuve principale (2, 20).

3. Évier de cuisine selon la revendication 1, **caractérisé en ce que** la bosse est limitée à la moitié supérieure de la paroi latérale (4a, 25a).

4. Évier de cuisine selon la revendication 1, **caractérisé en ce que** la paroi latérale (4a, 25a) présentant la bosse forme la transition vers l'égouttoir (22).

5. Évier de cuisine selon la revendication 1, **caractérisé en ce qu'**au moins la moitié environ de la cuve additionnelle (3, 21) est située en dehors de la forme de base de la cuve principale (2, 20).

6. Évier de cuisine selon la revendication 1, **caractérisé en ce qu'**il existe une transition entre la cuve principale (2) et la cuve additionnelle (3), dont le niveau se situe au-dessus de l'écoulement (8) de la cuve additionnelle (3), mais au-dessous des bords supérieurs des cuves.

7. Évier de cuisine selon la revendication 1, **caractérisé en ce que** la cuve additionnelle (3, 21) présente un dispositif de fixation pour un accessoire de cuve (9) pouvant être placé dans la cuve additionnelle (3, 21).

8. Évier de cuisine selon la revendication 7, **caractérisé en ce que** le dispositif de fixation est réalisé en tant que fermeture amovible par serrage, à baïonnette ou analogues.

9. Évier de cuisine selon la revendication 7, **caractérisé en ce que** l'accessoire de cuve (9) pouvant être placé dans la cuve est adapté au contour de la cuve additionnelle (3, 21), mais est dans une large mesure réalisé avec une symétrie de révolution.

10. Évier de cuisine selon la revendication 7, **caractérisé en ce que** l'accessoire de cuve (9) possède un écoulement propre (8').

11. Évier de cuisine selon la revendication 7, **caractérisé en ce que**, lorsque ledit évier de cuisine est encastré sous le plan de travail (13), le bord supérieur de l'accessoire de cuve (9) dépasse dudit évier (1, 19), de telle manière qu'il est approximativement en alignement avec le dessus du plan de travail (13).

12. Évier de cuisine selon la revendication 7, comprenant une planche de préparation (14) pouvant être posée sur la cuve principale (2, 20), **caractérisé en ce que** la planche de préparation (14) est découpée d'un côté en suivant le contour de l'accessoire (9) de la cuve additionnelle.
